# EUROPÄISCHE PATENTSCHRIFT

(11) **EP 0 806 585 B1**
(45) Veröffentlichungstag und Bekanntmachung des Hinweises auf die Patenterteilung: **13.12.2000**
(21) Anmeldenummer: 97106988.5
(22) Anmeldetag: 28.04.1997
(51) Int. Cl.: F16D 55/22, F16D 65/095

(54) **Bremssattel für Scheibenbremsen**
Caliper for disc brake
Etrier pour frein à disque

(30) Priorität: 30.04.1996 DE 19617422
(43) Veröffentlichungstag der Anmeldung: 12.11.1997
(73) Patentinhaber: Eagle-Picher Wolverine GmbH, 74613 Öhringen (DE)
(72) Erfinder: Gneuss, Volker, 74163 Öhringen (DE)
(74) Vertreter: Lieck, Hans-Peter, Dipl.-Ing.

(56) Entgegenhaltungen:
- DE-A- 3 333 670
- DE-A- 4 004 607
- DE-A- 4 122 859
- DE-A- 4 418 955
- US-A- 4 475 634
- PATENT ABSTRACTS OF JAPAN vol. 012, no. 340 (M-740), 13. September 1988 & JP 63 101530 A (YUUSAN GASKET KK), 6. Mai 1988

## Beschreibung

Die Erfindung bezieht sich auf einen Bremssattel für Scheibenbremsen, mit einer Aufnahme für mindestens einen Kolben zum Bewegen einer Bremsbacke senkrecht zu deren Reibebene und mit mindestens einer Einrichtung zur Führung der Bremsbacke parallel zur Reibebene, wobei diese Einrichtung als eine Aussparung ausgebildet ist, in der ein Abstützelement befestigt ist, das aus der Aussparung vorragt und in der Aussparung von Geräuschdämpfungsmaterial umschlossen ist, wobei das Geräuschdämpfungsmaterial zum Kontakt mit dem Sattelkörper vorgesehen ist.

Bremssättel bilden im Fahrbetrieb häufig eine Geräuschquelle, die eine Umweltbelästigung darstellt und den Fahrkomfort beeinträchtigt. Zur Vermeidung oder zumindest zur Verringerung einer Geräuschentwicklung ist es bekannt, die Bremsbacken mit einem Dämpfungsblech zu versehen. Jedoch wird durch diese Maßnahme die Geräuschentwicklung der Bremssättel nicht immer zufriedenstellend vermindert. Besonders bei Hochleistungs-Bremssätteln, die für hohe Geschwindigkeiten und hohe Bremskräfte ausgelegt sind, ist eine stärkere Geräuschverminderung wünschenswert.

Ein Bremssattel der eingangs genannten Art ist aus der DE-A 44 18 955 bekannt. Weiterhin wird in dieser Druckschrift vorgeschlagen, einen hohlzylindrischen metallischen Anschlagring außen auf einen schwingungsdämpfenden Kunststoff aufzuschieben und diesen wiederum mittels einer Befestigungsschraube am Bremssattel zu befestigen. Die erzielte Geräuschdämpfung bei diesen vorbekannten Bremssätteln ist nicht zufriedenstellend.

Demgemäß liegt die Aufgabe der vorliegenden Erfindung darin, die Geräuschentwicklung von Bremssätteln weiter zu verringern.

Erfindungsgemäß wird diese Aufgabe bei einem Bremssattel der eingangs genannten Art dadurch gelöst, daß das Abstützelement über seine gesamte Länge von Geräuschdämpfungsmaterial umschlossen ist, und daß das Geräuschdämpfungsmaterial auch zum Kontakt mit der Bremsbacke vorgesehen ist.

Die Geräuschentwicklung eines erfindungsgemäßen Bremssattels ist äußerst gering, da die Bremsbacke nicht mehr unmittelbar an der Einrichtung anliegt, die sie parallel zur Reibebene führt, sondern von dieser Einrichtung durch ein Geräuschdämpfungsmaterial getrennt ist. Auf diese Weise werden auch sekundäre Geräuschquellen weitestgehend eliminiert, so daß bei einem erfindungsgemäßen Bremssattel durch die Sekundärdämpfungsmaßnahmen die Geräuschemission sehr reduziert ist.

Die Einrichtung zur parallelen Führung ist als eine Aussparung ausgebildet, in der ein Abstützelement befestigt ist, das aus der Aussparung hervorragt. Hierdurch ist die Einrichtung zur parallelen Führung nicht nur kostengünstig herstellbar, sondern auch einfach zu montieren. Das Abstützelement ist durch Geräuschdämpfungsmaterial vom Sattelkörper getrennt. Da somit sowohl die Bremsbacke als auch der Sattelkörper durch Geräuschdämpfungsmaterial vom Abstützelement getrennt sind, ist jede gegenseitige Geräuschübertragung nahezu ausgeschlossen.

In einer bevorzugten Weiterbildung der Erfindung ist die Aussparung ein Sackloch, an dessen Boden eine Gewindebohrung vorgesehen ist, und ist das Abstützelement in Form einer Abstützhülse mit einer Mittenbohrung ausgebildet, wobei die Abstützhülse mit einer sich durch die Mittenbohrung erstrekkenden Schraube, die in der Gewindebohrung festgeschraubt ist, in der Aussparung befestigt ist. Mit diesen Maßnahmen vereinfacht sich die Herstellung und die Montage noch weiter.

Besonders bevorzugt ist dabei der Kopf der Schraube in der Abstützhülse versenkt angeordnet. Eine Beschädigung des Geräuschdämpfungsmaterials oder der Bremsbacke durch einen vorstehenden Schraubenkopf ist somit ausgeschlossen.

Eine besonders effektive Geräuschdämpfung wird erzielt, wenn das Geräuschdämpfungsmaterial in Form eines Napfes ausgebildet ist, dessen Innenabmessungen den Außenabmessungen des Abstützelementes entsprechen und der das Abstützelement umschließt.

Bevorzugt weist das Geräuschdämpfungsmaterial im Bereich des Schraubenkopfes eine Öffnung auf. Die Schraube kann so betätigt werden, ohne daß das Geräuschdämpfungsmaterial vom Abstützelement entfernt werden muß.

Besonders bevorzugt ist das Geräuschdämpfungsmaterial zwischen den Seitenwänden des Abstützelementes und denen der Aussparung angeordnet und liegt das Abstützelement unmittelbar am Boden der Aussparung an.

In einer weiteren günstigen Ausführungsform der Erfindung ist der Bremssattel aus zwei Sattelhälften gebildet, deren einander zugewandte Schnittflächen mit Geräuschdämpfungsmaterial versehen ist. Mit dieser Maßnahme wird eine weitere Sekundärdämpfung erzielt, die die gesamte Geräuschentwicklung eines erfindungsgemäßen Bremssattels weiter verringert.

Vorzugsweise ist das Geräuschdämpfungsmaterial, mit dem die Einrichtung zur parallelen Führung versehen ist bzw. die das Abstützelement umschließt, ein nitrilbeschichtetes Stahlblech. Dagegen ist das Geräuschdämpfungsmaterial, mit dem die Schnittflächen der beiden Sattelhälften versehen sind, vorzugsweise ein nitrilbeschichtetes Aluminiumblech. Beide Bleche sind vorteilhafterweise jeweils beidseitig mit, insbesondere synthetischem, Nitrilkautschuk beschichtet. Hierdurch wird eine wirksame und dauerhaft haltbare Geräuschdämpfung gewährleistet, wobei der Nitrilkautschuk entsprechend den Umgebungsbedingungen auch ölbeständig ist.

Die Erfindung wird nachfolgend anhand der Zeichnung beispielshalber noch näher erläutert. Es zeigen:
- Fig. 1 -: eine Ansicht einer Sattelhälfte eines erfindungsgemäßen Bremssattels,
- Fig. 2 -: eine Vertikalansicht und eine Draufsicht eines Abstützelementes aus Fig. 1 und
- Fig. 3 -: einen Schnitt längs Linie III-III in Fig. 1.

Die in den Figuren dargestellte Sattelhälfte 1 eines Bremssattels weist eine Aufnahme 2 für zwei Kolben zum Bewegen einer Bremsbacke 3 senkrecht zu deren Reibebene sowie vier Abstützhülsen 4 zur Führung der Bremsbacke 3 parallel zu ihrer Reibebene, d.h. quer zur Bewegungsrichtung der Kolben, auf.

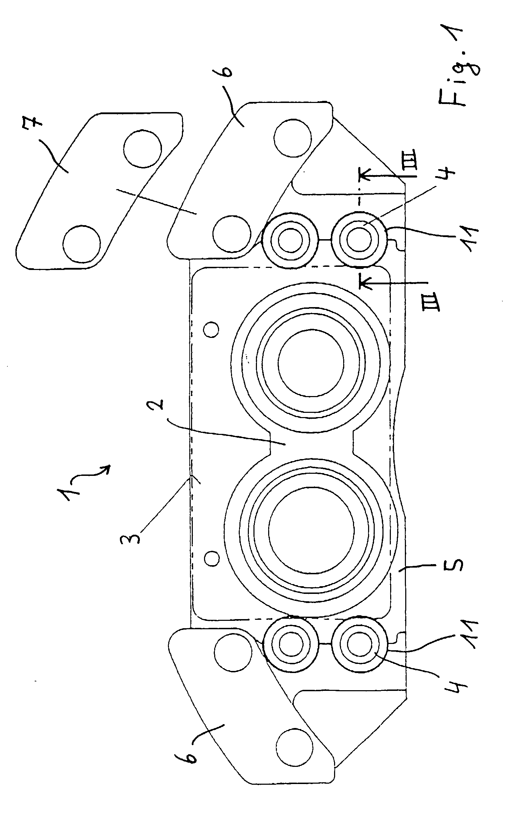

Die in Fig. 1 dargestellte Sattelhälfte 1 gehört zu einem 4-Kolben-Festsattel aus Aluminium. Jede Sattelhälfte 1 weist eine Gummimanschette 5 auf, die zur Aufnahme von zwei Kolben ausgelegt ist, die im dargstellten Fall unterschiedlich groß sind. Die Lage der Bremsbacke 3 ist durch eine gestrichelte Linie dargestellt, die den Umriß der Bremsbacke 3 andeutet. Die vier Abstützhülsen sind im dargestellten Beispiel in zwei Paaren an den zwei einander gegenüberliegenden Seiten der Bremsbacke 3 angeordnet, die im wesentlichen senkrecht zur Drehrichtung der Scheibe liegen, gegen die die Bremsbacke 3 durch die Kolben zur Erzielung der Bremswirkung angedrückt wird. D.h. die Abstützhülsen 4 liegen in Reibrichtung vor und hinter der Bremsbacke 3, so daß ein Verschieben der Bremsbacke 3 infolge in der entstehenden Reibkräfte verhindert wird. Die Sattelhälfte 1 weist zwei Schnittflächen 6 auf, die denen der zweiten Sattelhälfte entsprechen. Im zusammengebauten Zustand der beiden Sattelhälften sind die jeweils einander gegenüberliegenden Schnittflächen 6 mit einer Zwischenisolierung 7 aus Geräuschdämpfungsmaterial versehen. Dieses Geräuschdämpfungsmaterial ist ein Aluminiumblech, das mit einem beidseitig aufvulkanisierten, speziell gebundenen, ölbeständigen synthetischen Nitrilkautschauk beschichtet ist. Die Kontur dieser Zwischenisolierung 7 entspricht jeweils der Kontur der Schnittflächen 6, so daß hier keine störenden Überstände vorhanden sind.

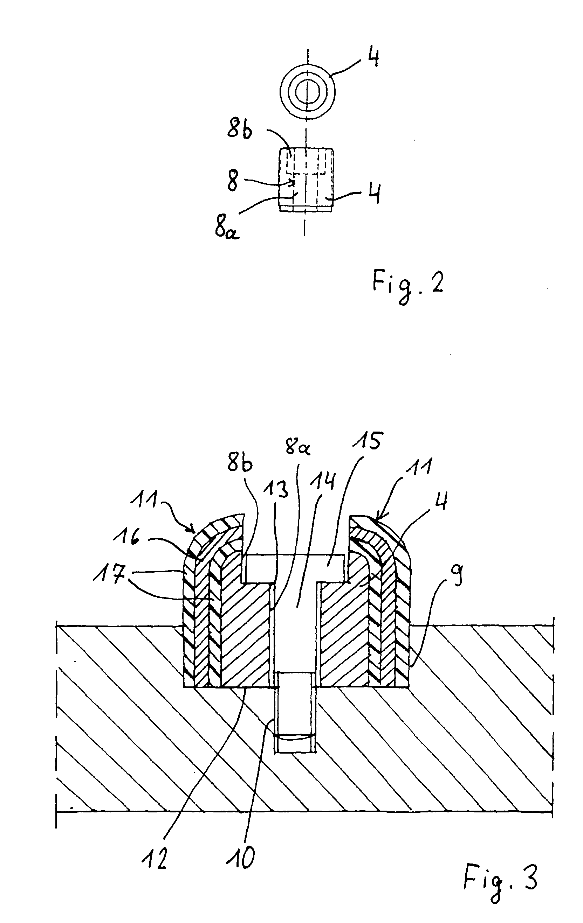

Aus Fig. 2 ist ersichtlich, daß die Abstützhülsen 4 jeweils zylindrisch mit einer Mittenbohrung 8 ausgebildet sind. Diese Mittenbohrung weist zwei Abschnitte 8a, 8b mit unterschiedlichem Durchmesser auf, wobei der Abschnitt 8a, der der Sattelhälfte 1 am nächsten liegt, den kleineren Durchmesser aufweist.

In Fig. 3 ist dargestellt, daß die Sattelhälfte 1 eine Aussparung bzw. Sackloch 9 aufweist, die bzw. das zylindrisch geformt ist und in der bzw. dem die Abstützhülse befestigt ist. Am Boden des Sackloches 9 ist dazu in der Mitte eine Gewindebohrung 10 vorgesehen.

Die Abstützhülse 4 ist von Geräuschdämpfungsmaterial 11 umschlossen, wobei lediglich die am Boden des Sackloches 9 anliegende Fläche 11 der Abstützhülse 4 sowie die Öffnung 13 am freien Ende der Abstützhülse 4 nicht von Geräuschdämpfungsmaterial 11 bedeckt ist. Das Geräuschdämpfungsmaterial 11 ist napf- bzw. hutförmig tiefgezogen und über die Abstützhülse 4 übergestülpt. Das Geräuschdämpfungsmaterial 11 schließt bündig mit der Fläche 12 der Abstützhülse 4 ab, die zur Anlage am Boden des Sackloches 9 bestimmt ist. Die Befestigung der Abstützhülse 4 mit dem hutförmig übergestülpten Geräuschdämpfungsmaterial 11 im Sackloch 9 erfolgt durch eine Schraube 14, die durch die Innenbohrung 8a, 8b der Abstützhülse 4 geführt und in der Gewindebohrung 10 am Boden des Sackloches 9 eingeschraubt ist. Der Durchmesser und die Längserstreckung des Abschnitts 8a der Innenbohrung 8, der dem Sackloch 9 abgewandt ist und den größeren Durchmesser aufweist, ist auf den Durchmesser und die Höhe des Schraubenkopfes 15 so abgestimmt, daß der Schraubenkopf 15 vollständig in der Abstützhülse 4 versenkt ist.

Die Abstützhülse 4 mit dem sie umgebenden Geräuschdämpfungsmaterial 11 ragt aus dem Sackloch 9 vor, und liegt im eingebauten Zustand der Bremsbacke 3 an deren Rand an und gewährleistet so deren Führung in Reibrichtung. Ein unmittelbarer Kontakt der Abstützhülse 4 mit der Bremsbacke 3 wird durch das Geräuschdämpfungsmaterial 11 in jedem Fall vermieden, so daß eine Geräuschentstehung durch Kontakt zwischen Bremsbacke 3 und Abstützhülse 4 sowie eine Geräuschübertragung von der Bremsbacke 3 zur Abstützhülse 4 vermieden ist. Da sich das Geräuschdämpfungsmaterial 11 auch in den Raum zwischen der Seitenwand der Abstützhülse 4 und der dem Sackloch 9 hineinerstreckt, ist auch hier eine Geräuschentstehung oder - übertragung verhindert. In der Kontaktfläche 12 zwischen der Abstützhülse 4 und dem Boden des Sackloches 9 die feste Verspannung dieser beiden Flächen durch die Befestigungsschraube 14 dafür, daß hier ebenfalls keine Geräusche entstehen.

Als Material ist für die Abstützhülse 4 Stahl vorgesehen. Das die Abstützhülse 4 umschließende bzw. ummantelnde Geräuschdämpfungsmaterial 11 ist ein Stahlblech 16, das mit einem beidseitig aufvulkanisierten, speziell gebundenen, ölbeständigen, synthetischen Nitrilkautschuk 17 beschichtet ist und 70-80 Shore A aufweist. Das Stahlblech 16 gewährleistet ein gutes Tiefziehverhalten, so daß die napf- bzw. hutförmigen Umschließungen für die Abstützhülsen 4 problemlos hergestellt werden können.

Das die Abstützhülsen 4 umschließende Geräuschdämpfungsmaterial 11 kann gegenüber dem an den Schnittflächen der Sattelhälften angeordneten Geräuschdämpfungsmaterial 7 dicker sein. Letzteres 7 muß relativ dünn sein, um Setzungserscheinungen gering zu halten. Dieses an den Schnittflächen 6 der Sattelhälften angeordnete Geräuschdämpfungsmaterial 7 kann statt Aluminium auch Keramik enthalten.

## Patentansprüche

1. Bremssattel für Scheibenbremsen, mit einer Aufnahme für mindestens einen Kolben zum Bewegen einer Bremsbacke senkrecht zu deren Reibebene und mit mindestens einer Einrichtung zur Führung der Bremsbacke parallel zur Reibebene, wobei diese Einrichtung alleine Aussparung (9) ausgebildet ist, in der ein Abstützelement (4) befestigt ist, das aus der Aussparung vorragt und in der Aussparung (9) von Geräuschdämpfungsmaterial (11) umschlossen ist, wobei das Geräuschdämpfungsmaterial zum Kontakt mit dem Sattelkörper vorgesehen ist,
dadurch gekennzeichnet,
daß das Abstützelement (4) über seine gesamte Länge von Geräuschdämpfungsmaterial (11) umschlossen ist, und daß das Geräuschdämpfungsmaterial (11) auch zum Kontakt mit der Bremsbacke (3) vorgesehen ist.

2. Bremssattel nach Anspruch 1,
dadurch gekennzeichnet,
daß die Aussparung ein Sackloch (9) ist, an dessen Boden eine Gewindebohrung (10) vorgesehen ist, und daß das Abstützelement in Form einer Abstützhülse (4) mit einer Mittenbohrung (8) ausgebildet ist, wobei die Abstützhülse (4) mit einer sich durch die Mittenbohrung (8) erstreckenden Schraube (14), die in der Gewindebohrung (10) festgeschraubt ist, in der Aussparung (9) befestigt ist.

3. Bremssattel nach Anspruch 2,
dadurch gekennzeichnet,
daß der Kopf (15) der Schraube (14) in der Abstützhülse (4) versenkt angeordnet ist.

4. Bremssattel nach einem der Ansprüche 1 bis 3,
dadurch gekennzeichnet,
daß das Geräuschdämpfungsmaterial (11) in Form eines Napfes ausgebildet ist, dessen Innenabmessungen den Außenabmessungen des Abstützelementes (4) entsprechen und der das Abstützelement (4) umschließt.

5. Bremssattel nach einem der Ansprüche 2 bis 4,
dadurch gekennzeichnet,
daß das Geräuschdämpfungsmaterial (11) im Bereich des Schraubenkopfes (15) eine Öffnung aufweist.

6. Bremssattel nach einem der Ansprüche 1 bis 5,
dadurch gekennzeichnet,
daß das Geräuschdämpfungsmaterial (11) zwischen den Seitenwänden des Abstützelementes (4) und denen der Aussparung (9) angeordnet ist und das Abstützelement (4) unmittelbar am Boden der Aussparung (9) anliegt.

7. Bremssattel nach einem der Ansprüche 1 bis 6,
dadurch gekennzeichnet,
daß er aus zwei Sattelhälften (1) gebildet ist, deren einander zugewandte Schnittflächen (6) mit Geräuschdämpfungsmaterial (7) versehen ist.

8. Bremssattel nach einem der Ansprüche 1 bis 6,
dadurch gekennzeichnet,
daß das Geräuschdämpfungsmaterial (11) ein nitrilbeschichtetes Stahlblech ist.

9. Bremssattel nach Anspruch 7,
dadurch gekennzeichnet,
daß das Geräuschdämpfungsmaterial (7) ein nitrilbeschichtetes Aluminiumblech ist.

10. Bremssattel nach Anspruch 8 oder 9,
dadurch gekennzeichnet,
daß die Bleche jeweils beidseitig mit Nitrilkautschuk beschichtet sind.

## Claims

1. Caliper for disk brake, with a seat for at least one piston to move a brake shoe vertically to its friction plane and with at least one device to guide the brake shoe parallel to the friction plane, this device being shaped as a recess (9) in which a support element (4) is fixed, which protrudes from the recess and is surrounded in the recess (9) by noise damping material (11), the noise damping material being in contact with the caliper body,
characterized in that the total length of the support element (4) is surrounded by noise damping material (11), and that the noise damping material (11) is also in contact with the brake shoe (3).

2. Caliper according to Claim 1, characterized in that the recess is a pocket hole (9) at the base of which there is a threaded hole (10), and that the support element is designed in the form of a support sleeve (4) with a centre hole (8), the support sleeve (4) being fixed in the recess (9) with a screw (14) passing through the centre hole (8) which is firmly screwed into the threaded hole (10).

3. Caliper according to Claim 2, characterized in that the head (15) of the screw (14) is flush with the surface of the support sleeve (4).

4. Caliper according to one of Claims 1 to 3, characterized in that the noise damping material (11) is shaped in the form of a cup, the inner dimensions of which correspond to the outer dimensions of the support element (4) and which surrounds the support element (4).

5. Caliper according to one of Claims 2 to 4, characterized in that the noise damping material (11) has an opening above the screw head (15).

6. Caliper according to one of Claims 1 to 5, characterized in that the noise damping material (11) is placed between the side-walls of the support element (4) and those of the recess (9) and the support element (4) lies directly on the base of the recess (9).

7. Caliper according to one of Claims 1 to 6, characterized in that it is formed from two caliper halves (1), the cut edges (6) facing each other are provided with noise damping material (7).

8. Caliper according to one of Claims 1 to 6, characterized in that the noise damping material (11) is a nitrile-coated steel panel.

9. Caliper according to Claim 7, characterized in that the noise damping material (7) is a nitrile-coated aluminium panel.

10. Caliper according to Claim 8 or 9, characterized in that the panels are coated on both sides with nitrile rubber.

## Revendications

1. Etrier de frein à disque comportant un logement pour au moins un piston pour déplacer une mâchoire de frein perpendiculairement à son plan de friction et au moins un dispositif de guidage de la mâchoire de frein parallèlement au plan de friction, ce dispositif étant constitué sous la forme d'un évidement (9) dans lequel est fixé un élément (4) d'appui qui fait saillie de l'évidement et qui est entouré dans l'évidement (9) de matière (11) d'amortissement du bruit, la matière d'amortissement du bruit étant prévue pour être en contact avec le corps de l'étrier
caractérisé
en ce que l'élément (4) d'appui est entouré sur toute sa longueur de matière (11) d'amortissement du bruit et en ce que la matière (11) d'amortissement du bruit est prévue également pour être en contact avec la mâchoire (3) de frein.

2. Etrier de frein suivant la revendication 1,
caractérisé
en ce que l'évidement est un trou (9) borgne au fond duquel est prévu un taraudage (10) et en ce que l'élément d'appui est constitué sous la forme d'une douille (4) d'appui ayant un trou (8) médian, la douille (4) d'appui étant fixée dans l'évidement (9) par une vis (14) qui passe dans le trou (8) médian et qui est vissée dans le taraudage (10).

3. Etrier de frein suivant la revendication 2,
caractérisé
en ce que la tête (15) de la vis (14) est noyée dans la douille (4) d'appui.

4. Etrier de frein suivant l'une des revendications 1 à 3,
caractérisé
en ce que la matière (11) d'amortissement du bruit est constituée sous la forme d'un godet dont les dimensions intérieures correspondent aux dimensions extérieures de l'élément (4) d'appui et qui entoure l'élément (4) d'appui.

5. Etrier de frein suivant l'une des revendications 2 à 4,
caractérisé en ce que la matière (11) d'amortissement du bruit comporte une ouverture dans la région de la tête (15) de la vis.

6. Etrier de frein suivant l'une des revendications 1 à 5,
caractérisé
en ce que la matière (11) d'amortissement du bruit est interposée entre les parois latérales de l'élément (4) d'appui et celles de l'évidement (9) et l'élément (4) d'appui s'applique directement au fond de l'évidement (9).

7. Etrier de frein suivant l'une des revendications 1 à 6,
caractérisé
en ce qu'il est constitué de deux moitiés (1) d'étrier dont les faces (6) de coupe tournées l'une vers l'autre sont munies de matière (7) d'amortissement du bruit.

8. Etrier de frein suivant l'une des revendications 1 à 6,
caractérisé
en ce que la matière (11) d'amortissement du bruit est une tôle d'acier revêtue de nitrile.

9. Etrier de frein suivant la revendication 7,
caractérisé
en ce que la matière (7) d'amortissement du bruit est une tôle d'aluminium revêtue de nitrile.

10. Etrier de frein suivant la revendication 8 ou 9,
caractérisé
en ce que les tôles sont revêtues des deux côtés de caoutchouc nitrile.
